# EUROPEAN PATENT SPECIFICATION

(11) **EP 1 764 243 B1**
(45) Date of publication and mention of the grant of the patent: **02.12.2009**
(21) Application number: 06018930.5
(22) Date of filing: 11.09.2006
(51) Int. Cl.: B60H 1/00, B60J 7/16

(54) **Tractor cabs**
Schlepperkabine
Cabine de tracteur

(30) Priority: 20.09.2005 GB 0519129
(43) Date of publication of application: 21.03.2007
(73) Proprietor: AGCO SA, 60026 Beauvais (FR)
(72) Inventor: Sap, Bruno, 60000 Beauvais (FR); Shute, Malcolm, 60650 St Germain La Poterie (FR); Budin, Bertrand, 60510 Haudivllers (FR); Andiano, Jean, 60510 Oroer (FR)
(74) Representative: Morrall, Roger

(56) References cited:
- EP-A- 1 787 835
- DE-A1- 10 241 821
- GB-A- 2 299 060
- JP-A- 11 348 822

## Description

This invention relates to tractor cabs and in particular to the design of the roofs of such cabs.

JP 11 348822 discloses a cab roof for a tractor or similar vehicle in which a large number of separate areas of glass are provided some adjacent a front edge of the roof and others adjacent a rear edge of the roof. Such a glass configuration improves visibility but still leaves blind spots and is problematical when it is desired to install an air conditioning/ventilation unit in the cab roof.

It is an object of the present invention to provide a cab with a roof which includes an air conditioning/ventilation unit and an area of glass for improved visibility.

Thus according to the present invention there is provided a tractor cab roof having a roof with a first area of glass located adjacent a front edge of the roof and a second area of glass located adjacent a rear edge of the roof, **characterised in that** at least one of the areas of glass can be opened for further ventilation and is provided with one or more gas struts to support it in an open position for ventilation and in that an air conditioning/ventilation unit is located centrally in a transverse sense in the cab roof between the two areas of glass above a head lining of the roof, the lower surface of the head lining being angled upwardly towards the first and second areas of glass to further improve visibility through the glass areas.

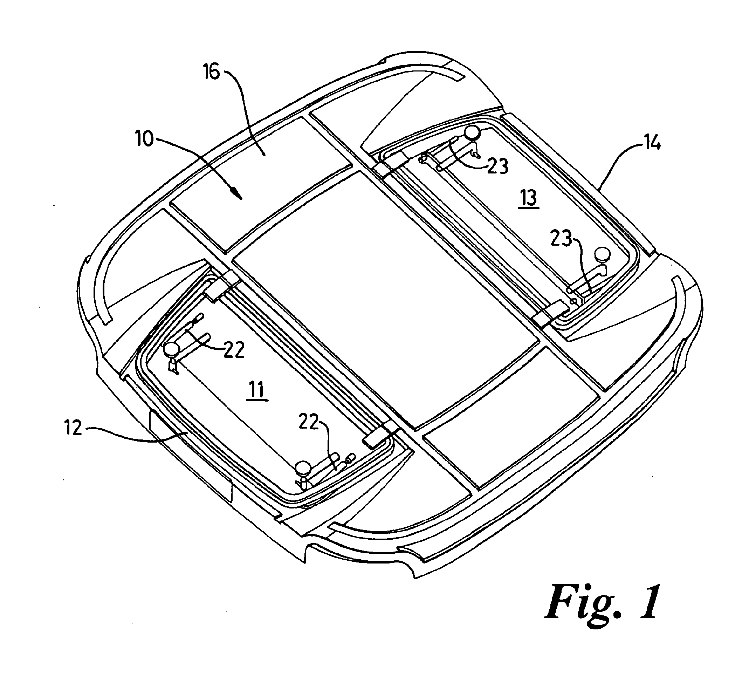

One embodiment of the present invention will now be described, by way of example only, with reference to the accompanying drawings in which:-
Figure 1 is perspective plan view of a roof of a tractor cab in accordance with the invention;
Figure 2 is a perspective view of the roof of Figure 1 with the upper outer skin of the roof removed;
Figure 3 is a longitudinal section through the roof of Figure 1;
Figure 4 is a longitudinal section through a tractor cab fitted with the roof of Figures 1 to 3, and
Figure 5 is a view of an air filter arrangement used in the roof of Figures 1 to 3.

Referring to the drawings, a tractor cab roof 10 has a first area of glass 11 adjacent a front edge 12 of the roof and a second area of glass 13 adjacent a rear edge 14 of the roof. Inside the roof an air conditioning/ventilation unit 15 is located between the two areas of glass. This air conditioning/ventilation unit is located between the upper outer metal skin 16 of the roof and a head lining 17 and includes fans 15a, evaporator 15b, heating radiator 15c and recirculating air ducts 15d.

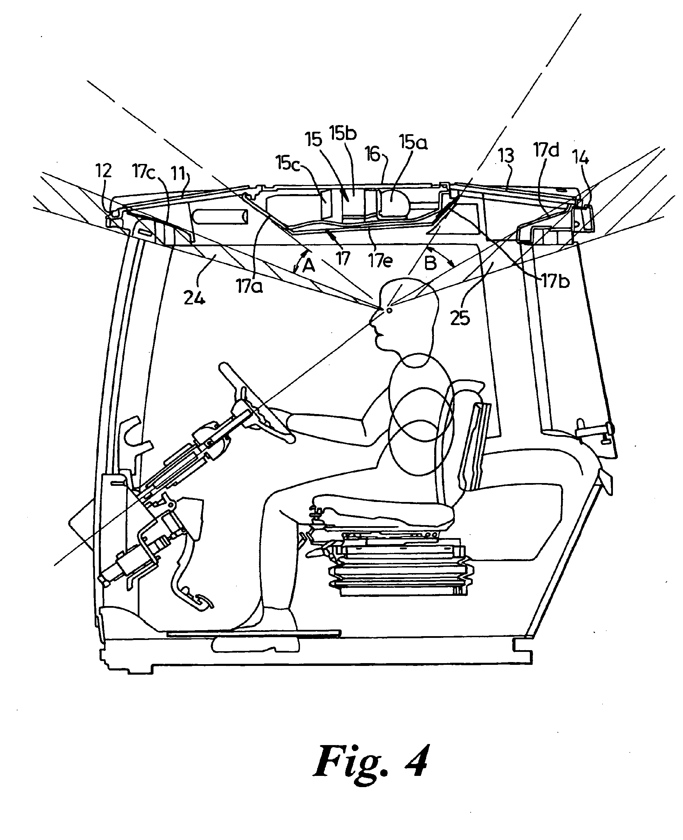

As best seen in Figure 4, the head lining 17 is angled upwardly at 17a and 17b towards the first and second areas of glass 11 and 13 to further improve the visibility of the driver through the first and second areas of glass. Similarly the lower areas 17c and 17d of the head lining are also angled upwardly to improve visibility. Figure 4 shows the angle of visibility A through the front first area of glass 11 and angle of visibility B to the rear second glass area 13.

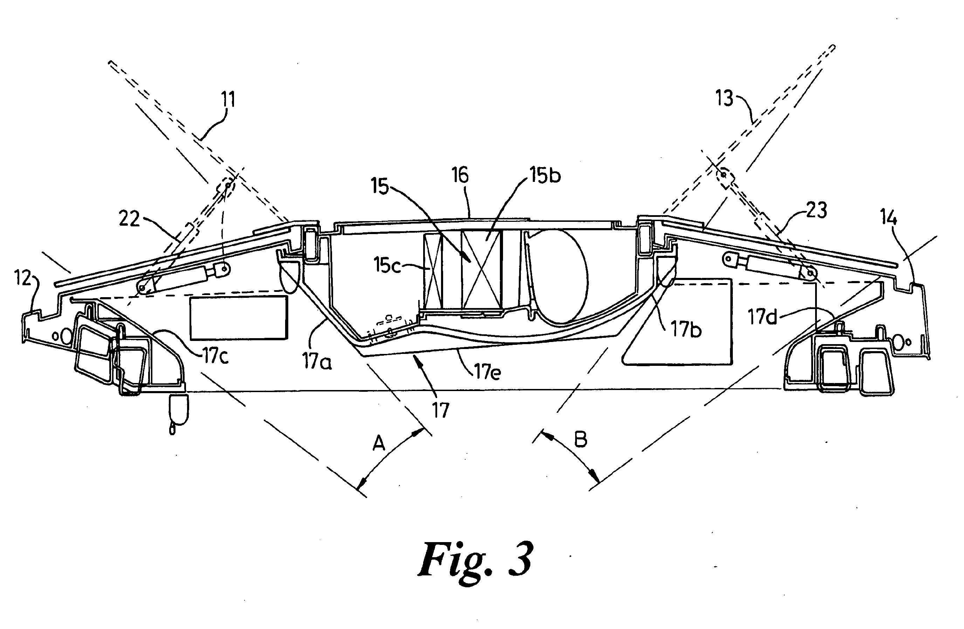

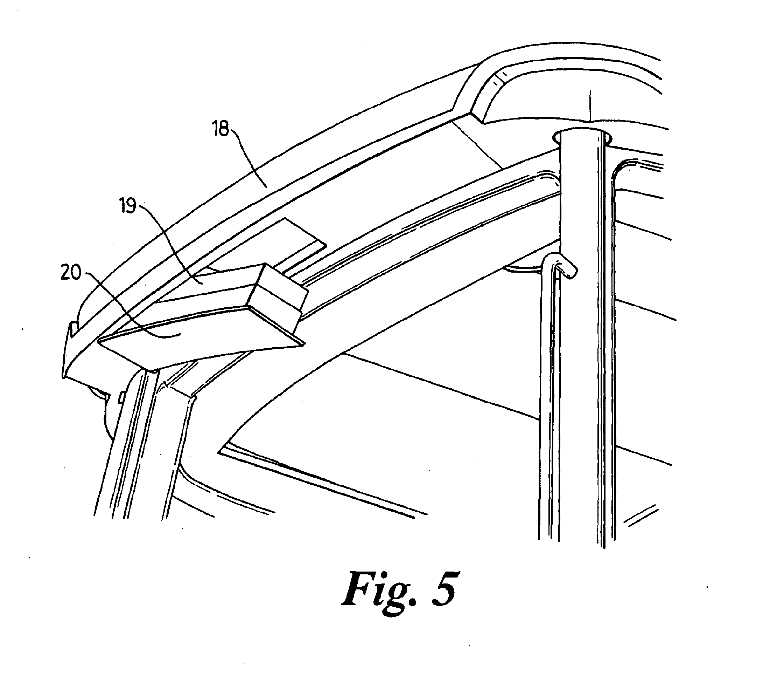

As can be seen from Figures 3 and 4 the central region 17e of head lining 17 is the lowest point of the head lining which houses part of the air conditioning/ventilation unit 15. Other components of the air conditioning/ventilation unit are disposed in the side regions 18 of the roof part of which overhangs the cab, as can be seen from Figure 5.

In the arrangement shown in Figure 5, an air filter 19 for the air conditioning/ventilation unit is housed above a trap door 20 and is accessed by lowering the trap door whereupon the air filter 19 can be removed for cleaning without the risk of any debris falling inside the cab.

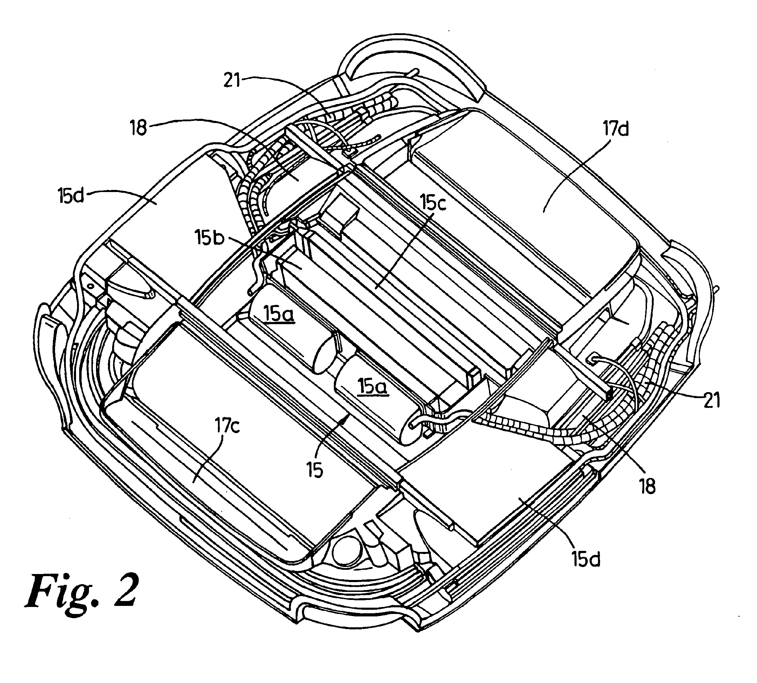

As is clearly visible in Figure 2, the piping 21 for the air conditioning/ventilation unit is located in the side areas 18 of the roof to minimise the intrusion of the unit into the interior space of the cab.

Both of the areas of glass 11 and 13 are provided with gas struts 22 and 23 respectively for holding the glass areas in an open position as indicated in Figure 3.

In an alternative construction (not shown) the air conditioning/ventilation unit maybe housed largely in the side areas 18 of the roof to reduce the intrusion of the unit into the interior space of the cab.

As is conventional, the head lining 17 may include inlets or outlets for air which connect with the air conditioning/ventilation unit.

As will be appreciated by providing the tractor cab with front and rear areas of glass 11 and 13 and by suitably locating the air conditioning/ventilation unit to minimize the effect of the presence on visibility through the glass areas the field of view of the tractor driver is greatly improved. Thus, as shown in Figure 4, only in the shaded areas 24 and 25 is the driver's field of vision obscured.

## Claims

1. A tractor cab having a roof (10) with a first area of glass (11) located adjacent a front edge (12) of the roof and a second area of glass (13) located adjacent a rear edge (14) of the roof, **characterised in that** at least one of the areas of glass (11,13) can be opened for further ventilation and is provided with one or more gas struts (22,23) to support it in an open position for ventilation and **in that** an air conditioning/ventilation unit (15) is located centrally in a transverse sense in the cab roof between the two areas of glass above a head lining (17) of the roof, the lower surface of the head lining being angled upwardly (17a,17b) towards the first and second areas of glass (11,13) to further improve visibility through the glass areas.

## Patentansprüche

1. Kabine eines Arbeitsfahrzeugs, Zugfahrzeugs, Schleppers oder Traktors mit einem Dach (10), welches einen ersten Bereich aus Glas (11) besitzt, der benachbart einem vorderen Rand (12) des Daches angeordnet ist, und einen zweiten Bereich aus Glas (13), der benachbart einem hinteren Rand (14) des Daches angeordnet ist, besitzt, **dadurch gekennzeichnet, dass** zumindest einer der Bereiche aus Glas (11, 13) für eine zusätzliche Lüftung geöffnet werden kann und mit einer Gasstrebe oder mehreren Gasstreben (22, 23) ausgestattet ist, um diesen in einer offenen Stellung für die Lüftung abzustützen, und dass eine Klima- und/oder Lüftungseinheit (15) in transversalem Sinne zentral in dem Dach der Kabine zwischen den beiden Bereichen aus Glas über einem Dachelement oder einer Kopf-Auskleidung, Dachauskleidung oder Auskleidung des Himmels (17) des Daches (im Folgenden "Dachelement", engl.: "head lining") angeordnet ist, wobei die untere Oberfläche des Dachelements in Richtung des ersten und zweiten Bereichs aus Glas (11, 13) nach oben abgewinkelt ist (17a, 17b), um die Durchsicht durch die Bereiche aus Glas zu verbessern.

## Revendications

1. Cabine de tracteur comportant un toit (10) avec une première zone vitrée (11) localisée de manière adjacente à un bord avant (12) du toit et une deuxième zone vitrée (13) localisée de manière adjacente à un bord arrière (14) du toit, **caractérisée en ce qu'**au moins l'une des zones vitrées (11, 13) peut être ouverte afin d'assurer une meilleure ventilation et est équipée d'une ou plusieurs vérins à gaz (22, 23) afin de la supporter dans une position ouverte de manière à assurer la ventilation et **en ce qu'**une unité de conditionnement d'air/ventilation (15) est placée de manière centrale dans une direction transversale sur le toit de cabine entre les deux zones vitrées au-dessus d'un doublage supérieur (17) du toit, la surface inférieure du doublage supérieur étant inclinée vers le haut (17a, 17b), vers les première et deuxième zones vitrées (11, 13) afin d'améliorer davantage la visibilité à travers les zones vitrées.
